Europäisches Patentamt

European Patent Office

Office européen des brevets

(19)

(11) Numéro de publication : **0 487 427 A1**

# (12) DEMANDE DE BREVET EUROPEEN

(21) Numéro de dépôt : **91403152.1**

(22) Date de dépôt : **22.11.91**

(51) Int. Cl.⁵ : **B60F 1/04,** B60G 17/052, B62D 61/12

(30) Priorité : **23.11.90 FR 9014641**

(43) Date de publication de la demande : **27.05.92 Bulletin 92/22**

(84) Etats contractants désignés : **AT BE CH DE DK ES FR GB GR IT LI LU NL SE**

(71) Demandeur : **SOVAM INDUSTRIES
Route de Moncoutant
Parthenay ( Deux Sèvres ) (FR)**

(72) Inventeur : **Crosnier, Antoine
77 rue de la Cartoucherie
Clermont Ferrand, (Puy de Dome) (FR)**
Inventeur : **Harlay, Jean-Michel
27, avenue Victor Hugo
F- 79200 Parthenay (FR)**

(74) Mandataire : **Cabinet Pierre HERRBURGER
115, Boulevard Haussmann
F-75008 Paris (FR)**

(54) **Semi-remorque à essieux escamotables notamment du type rail-route.**

(57)    Semi-remorque caractérisée en ce que chaque essieu (6) supportant les roues (7) de roulement sur route, est supporté par un châssis (11) monté à pivotement sous le plateau de la semi-remorque et en ce que ce châssis (11) est relié au plateau de la semi-remorque par au moins une genouillère (12) dont les deux bras (12$_1$, 12$_2$) articulés l'un sur l'autre, sont articulés par leur extrémité libre, l'un sur le plateau de la semi-remorque, l'autre sur le châssis (11), un vérin de poussée (15) étant relié à cette genouillère pour son actionnement.

FIG.2

EP 0 487 427 A1

Jouve, 18, rue Saint-Denis, 75001 PARIS

La semi-remorque de l'invention est caractérisée en ce que chaque essieu supportant les roues de roulement sur route, est supporté par un châssis monté à pivotement sous le plateau de la semi-remorque et en ce que ce châssis est relié au plateau de la semi-remorque par au moins une genouillère dont les deux bras articulés l'un sur l'autre, sont articulés par leur extrémité libre, l'un sur le plateau de la semi-remorque, l'autre sur le châssis, un vérin de poussée étant relié à cette genouillère pour son actionnement.

Suivant une autre caractéristique de l'invention, le châssis se compose de deux bras parallèles montés à pivotement à une de leurs extrémités sous le plateau et reliés l'un à l'autre, à leur autre extrémité, par une traverse.

Suivant une autre caractéristique de l'invention, le vérin de poussée pour l'actionnement de la genouillère est relié à l'axe d'articulation l'un sur l'autre des deux bras de cette genouillère.

Suivant une autre caractéristique de l'invention, chaque essieu supportant les roues de roulement sur route, est supporté par le châssis par l'intermédiaire de ressorts à lame reliés, par une de leurs extrémités, au châssis et par leur autre extrémité à un vérin de suspension également relié au châssis pivotant.

Suivant une autre caractéristique de l'invention, l'essieu est supporté par une paire de ressorts à lame coopérant chacun avec un vérin de suspension et la genouillère est disposée entre les vérins de suspension, les bras de la genouillère étant de longueur telle que l'articulation de la genouillère reliée au vérin d'actionnement passe d'un côté à l'autre de la verticale passant par l'essieu lorsque cet essieu passe de la position basse de roulement sur route à la position haute relevée d'escamotage.

L'invention est représentée à titre d'exemple non limitatif sur les dessins ci-joints dans lesquels :
– la figure 1 est une vue latérale schématique d'une semi-remorque du type rail-route à essieux escamotables,
– la figure 2 est une vue latérale d'un train d'essieux d'une semi-remorque conforme à l'invention, dans le cas d'un véhicule rail-route,
– les figures 3 et 4 sont respectivement des vues de dessous et de dessus de la figure 4,
– les figures 5, 6, 7 et 8 représentent, en demi-coupe longitudinale, le train d'essieux de la figure 2 dans ses diverses positions correspondant, pour la figure 5 à la position escamotée des roues de roulement sur route, pour la figure 6 à la position de mise en contact des roues avec le sol, pour la figure 7 à la position de roulement sur route et pour la figure 8 à la position surélevée de la semi-remorque.

La présente invention a en conséquence pour but la réalisation d'une semi-remorque à essieux escamotables, qui soit de construction simple et robuste et qui puisse, dans le cas d'un véhicule rail-route, passer rapidement et de manière extrêmement sûre de la position de roulement sur rails à la position de roulement sur route et inversement.

Suivant l'invention, le train d'essieux escamotables pourvus des roues de roulement sur route est, en outre, de construction compacte dans le sens de la longueur de la semi-remorque aussi bien que dans le sens de sa largeur, cette construction compacte permettant notamment de placer l'ensemble des mécanismes du train d'essieux escamotables à l'intérieur de l'encombrement en largeur du plateau d'une semi-remorque.

En outre, la semi-remorque conforme à l'invention apporte une grande sécurité dans la position de roulement sur route, par l'auto-verrouillage de l'ensemble escamotable dans sa position basse.

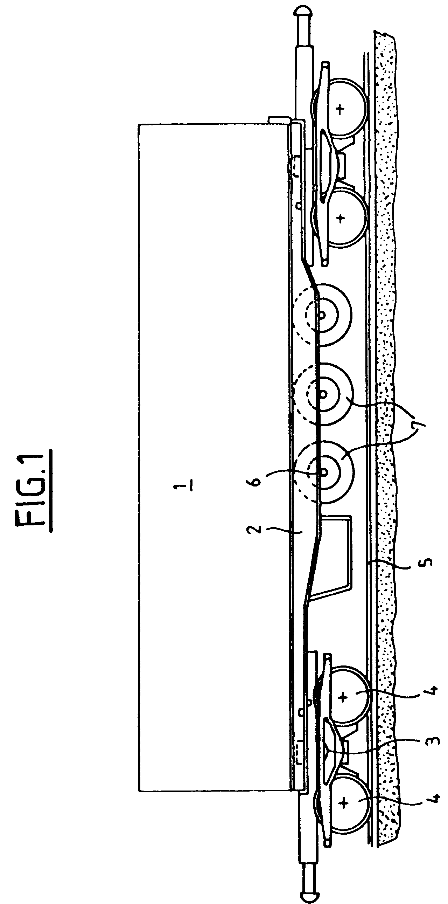

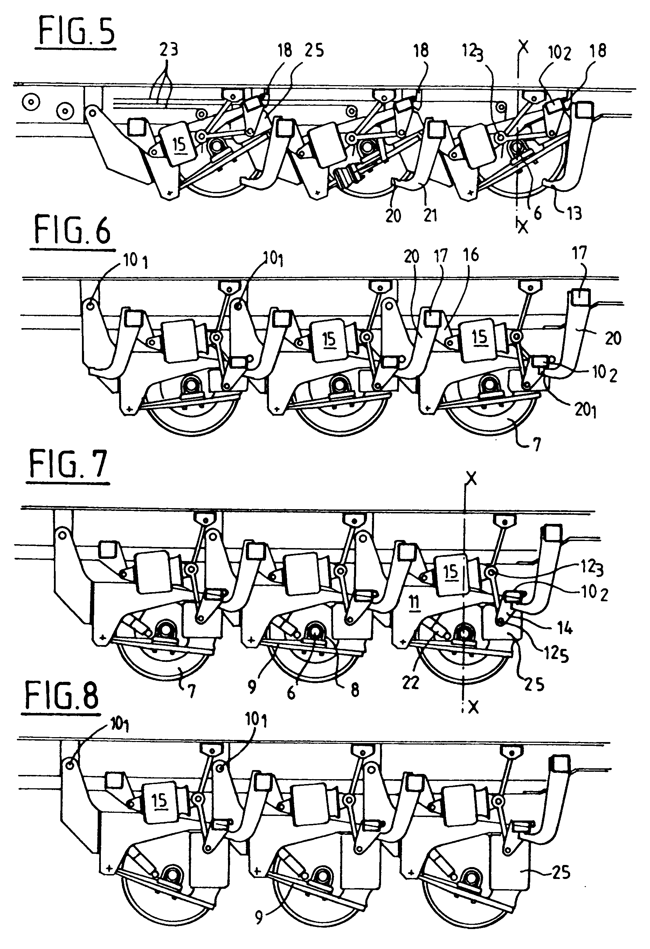

Cette semi-remorque se compose, comme cela est représenté sur la figure 1, d'un plateau 1 dont les longerons 2 peuvent venir en appui, de manière amovible, sur des boggies 3 pourvus de roues 4 de roulement sur des rails 5. Les longerons 2 du plateau 1 comportent également des essieux 6 pourvus de roues 7 de roulement de la semi-remorque sur la route. Ces essieux sont escamotables pour se placer, soit en position haute comme cela est représenté sur la figure 1 dans le cas du déplacement de la semi-remorque sur des rails, soit en position basse, comme cela est représenté sur la figure 7, les boggies 3 étant dans ce cas ôtés et la semi-remorque étant reliée à un véhicule tracteur pour sa circulation sur route.

Dans l'exemple représenté, la semi-remorque comporte trois essieux 6 disposés l'un derrière l'autre, chaque essieu étant bridé en 8 sur une paire de lames de ressort parallèles 9.

Ces lames de ressort 9 sont chacune reliées, par une de leurs extrémités, à un bras 10 lui-même monté pivotant par l'une de ses extrémités sous le plateau de la semi-remorque par l'intermédiaire d'axes $10_1$.

Les extrémités libres de ces deux bras 10 sont reliées par une traverse $10_2$ de façon que ces deux bras et cette traverse forment ensemble un châssis rigide 11 pivotant sous le châssis à son extrémité dirigée vers l'avant de la semi-remorque.

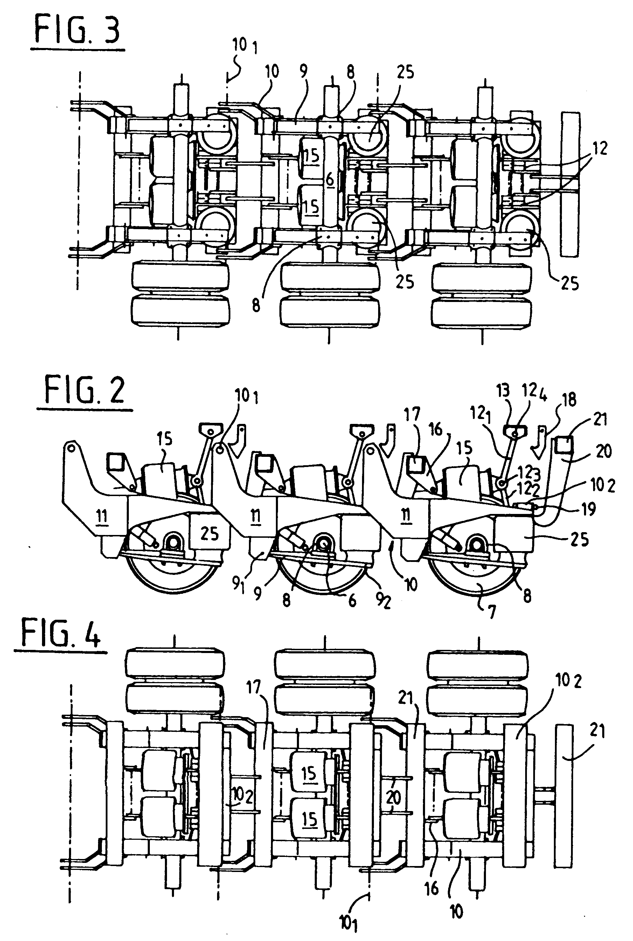

Les extrémités libres $9_2$ (figure 2) des lames de ressort 9 sont elles-mêmes reliées à l'extrémité libre des bras 10 adjacente de la traverse $10_2$ par l'intermédiaire d'un vérin pneumatique de suspension 25.

Comme on le remarque sur les figures 3 et 4, les axes de pivotement $10_1$ des deux bras 10 d'un châssis 11 de support d'essieu sont disposés de part et d'autre de la zone de débattement du châssis adjacent 11 sauf bien entendu pour les châssis d'extrémité du train escamotable.

Chaque châssis 11 relié d'une manière pivotante au plateau 1 par les axes $10_1$, est également relié à ce plateau par une genouillère se composant en réalité, dans l'exemple représenté, de deux genouillères parallèles 12 comprenant chacune deux bras $12_1$, $12_2$

qui sont articulés l'un sur l'autre par un axe d'articulation $12_3$. L'extrémité libre de l'un des bras $12_1$ est articulée en $12_4$ sur une patte 13 fixée sous le plateau de la semi-remorque, alors que l'extrémité libre de l'autre bras $12_2$ est articulée sur un axe $12_5$ (figure 7) prévu sur une patte 14 soudée à la traverse $10_2$.

L'axe d'articulation $12_3$ des deux bras $12_1$ et $12_2$ de la genouillère, est relié à un vérin pneumatique 15 dit "vérin de poussée" pour l'actionnement de la genouillère. Chaque vérin est relié de manière articulée à des pattes 16 soudées à une traverse 17 fixée sous le plateau 1.

Les bras $12_1$, $12_2$, des genouillères 12 sont situés entre les vérins de suspension 25, la longueur de ces bras étant telle que l'axe d'articulation $12_3$ passe d'un côté à l'autre de la verticale X-X passant par l'essieu considéré 6 lorsque l'essieu passe de la position haute escamotée (voir figure 5) à la position basse de roulement sur route (voir figure 7).

Cette disposition permet d'aboutir à un écart maximum entre les positions escamotée et de roulement sur route, tout en réalisant un train d'essieux compact.

Sous le plateau de la semi-remorque sont également prévus des dispositifs d'accrochage 18 se composant de crochets montés pivotants sous l'action de vérins et à l'encontre de ressorts de rappel (non représentés). Ces dispositifs d'accrochage 18 sont destinés à coopérer avec des saillies 19 prévues sur les traverses $10_2$ afin de verrouiller les essieux en position escamotée représentée sur la figure 5.

La position basse du châssis 11 est déterminée par des surfaces de butée $20_1$ (voir notamment figure 6) qui sont prévues sur des bras 20 soudés à des traverses 17 du plateau de la semi-remorque.

Ces surfaces de butée $20_1$ sont disposées de manière telle qu'elles reçoivent en appui les traverses $10_2$ des châssis 11 lorsque les roues 7 viennent en contact avec le sol (figure 6), c'est-à-dire lorsque ces roues sont sensiblement au même niveau que les roues de roulement 4 des boggies 3 de roulement sur les rails 5.

Dans cette position, les bras $12_1$, $12_2$ des genouillères 12 sont amenés pratiquement dans le prolongement l'un de l'autre à l'aide des vérins de poussée 15, ce qui constitue un verrouillage rigide des châssis 11 quine peuvent ni pivoter vers le bas, du fait des surfaces de butée $20_1$, ni pivoter vers le haut, du fait des genouillères déployées 12.

Comme on le remarque également sur les dessins ci-joints et notamment sur la figure 6, les traverses 17 supportent, d'une part les pattes 16 sur lesquelles sont articulés les vérins de poussée 15 et, d'autre part, les pattes 20 comportant les surfaces de butée $20_1$ pour la traverse $10_2$ du châssis pour l'essieu adjacent.

Ainsi, lorsque l'ensemble des vérins de poussée 15 est actionné, les traverses 17 sont soumises par les bras 20 et 16 à des forces de torsion qui s'équilibrent l'une l'autre et qui contribuent à verrouiller fermement les châssis 11 en position.

Les essieux 6 bridés sur les lames de ressort 9 sont soumis à l'action des vérins de suspension 25 ainsi qu'à l'action d'amortisseurs 22 articulés par ailleurs sur les châssis 11.

Les vérins de suspension 25 sont réalisés de façon à occuper deux positions. L'une de ces positions représentée sur la figure 7 correspond au déplacement sur route de la semi-remorque, alors que pour l'autre position, représentée sur la figure 8, le vérin 25 est développé au maximum de façon à placer en position surélevée le plateau 1 de la semi-remorque. Cette position correspond alors par exemple à la mise à niveau de la plate-forme avec un quai de chargement et de déchargement.

Le fonctionnement de cette semi-remorque est le suivant :

Lorsque les essieux sont escamotés pour permettre un déplacement sur rail, les châssis 11 sont verrouillés en position haute (voir figure 5) par le dispositif d'accrochage 18.

Pour passer à la position de déplacement sur route, il convient donc d'alimenter tout d'abord les vérins qui font pivoter le dispositif d'accrochage 18 afin de libérer les châssis 11.

Le poids des châssis et de l'ensemble des pièces qu'ils supportent commencent tout d'abord par faire pivoter ces châssis autour de leur axe de pivotement $10_1$. Ensuite, en mettant sous pression les vérins de poussée 15, les châssis 11 poursuivent leur mouvement de pivotement jusqu'à ce que les roues de roulement sur route 7 viennent au contact du sol tandis que les traverses $10_2$ des châssis 11 sont verrouillés contre les surfaces d'appui $20_1$ par les genouillères 12.

Arrivés dans cette position, les vérins de suspension 25 sont alors mis sous pression afin de faire pivoter les lames de ressort 9, ce qui a pour effet de soulever le plateau de la semi-remorque ainsi que les châssis 11 par rapport au sol.

Cette position représentée sur la figure 7 correspond à la position de déplacement sur route.

A partir de la position de roulement sur route représentée sur la figure 7, il est également possible de surélever le plateau de la semi-remorque par exemple pour la mettre à hauteur d'un quai de chargement et de déchargement, en amenant les vérins de suspension 15 dans leur position de développement maximum représentée sur la figure 8.

Pour passer de la position de roulement sur route à la position escamotée, il suffit de couper l'alimentation des vérins de poussée et des vérins de suspension et d'actionner des vérins (non représentés) qui sont reliés aux divers châssis par des câbles 23 (voir figure 5). Ces câbles soulèvent alors les châssis jusqu'à ce que les saillies 19 viennent en prise sur les crochets 18.

## Revendications

**1)** Semi-remorque à essieux escamotables notamment du type rail-route, dont chaque essieu (6) supportant les roues (7) de roulement sur route, est supporté par un châssis (11) monté à pivotement sous le plateau de la semi-remorque, ce châssis (11) étant relié au plateau de la semi-remorque par au moins une genouillère (12) dont les deux bras ($12_1$, $12_2$) articulés l'un sur l'autre, sont articulés par leur extrémité libre, l'un sur le plateau de la semi-remorque, l'autre sur le châssis (11), un vérin de poussée (15) étant relié à cette genouillère pour son actionnement, semi-remorque caractérisée en ce que chaque essieu (6) supportant les roues de roulement sur route, est supporté par le châssis pivotant (11) par l'intermédiaire de ressorts à lame (9) reliés, par une de leurs extrémités, au châssis (11) et par leur autre extrémité à un vérin de suspension également relié au châssis pivotant.

**2)** Semi-remorque conforme à la revendication 1, caractérisée en ce que le châssis (11) se compose de deux bras parallèles ($10_1$) montés à pivotement à une de leurs extrémités sous le plateau et reliés l'un à l'autre, à leur autre extrémité, par une traverse ($10_2$).

**3)** Semi-remorque conforme à l'une quelconque des revendications précédentes, caractérisée en ce que des amortisseurs (22) sont prévus entre chaque bras du châssis et l'essieu.

**4)** Semi-remorque conforme à l'une quelconque des revendications précédentes, caractérisée en ce que le plateau comporte des surfaces de butée (20) coopérant avec le châssis (11) pour limiter sa position basse.

**5)** Semi-remorque conforme à l'une quelconque des revendications précédentes, caractérisée en ce que le plateau comporte un dispositif d'accrochage (18) coopérant avec le châssis (11) pour maintenir de manière amovible l'essieu en position relevée.

**6)** Semi-remorque conforme à l'une quelconque des revendications précédentes, caractérisée en ce que l'essieu est supporté par une paire de ressorts à lame (9) coopérant chacun avec un vérin de suspension (25) et la genouillère (12) est disposée entre les vérins de suspension (25), les bras ($12_1$, $12_2$) de la genouillère étant de longueur telle que l'articulation ($12_3$) de la genouillère reliée au vérin d'actionnement passe d'un côté à l'autre de la verticale (X-X) passant par l'essieu (6) lorsque cet essieu passe de la position basse de roulement sur route à la position haute relevée d'escamotage.

**7)** Semi-remorque conforme à l'une quelconque des revendications précédentes, caractérisée en ce qu'un vérin est relié à chaque châssis (11) par un câble (23) pour la mise en position escamotée du châssis.

**8)** Semi-remorque conforme à l'une quelconque des revendications précédentes, caractérisée en ce qu'elle comporte plusieurs essieux (6) disposés l'un derrière l'autre, le vérin d'actionnement de la genouillère (12) d'un essieu étant relié à une traverse (17) fixée sous le plateau, cette traverse supportant également les surfaces de butée (20) limitant la position basse de l'essieu adjacent.

**9)** Semi-remorque conforme à l'une quelconque des revendications précédentes, caractérisée en ce qu'elle comporte plusieurs essieux disposés l'un derrière l'autre, le châssis (11) supportant un essieu étant monté à pivotement sous le plateau de la semi-remorque de part et d'autre de la zone de pivotement du châssis (11) de l'essieu adjacent.

# FIG.1

EP 0 487 427 A1

# FIG. 3

# FIG. 2

# FIG. 4

FIG.5

FIG.6

FIG.7

FIG.8

Office européen
des brevets

**RAPPORT DE RECHERCHE EUROPEENNE**

Numero de la demande

EP 91 40 3152

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 448 132 (W. BEATTY)<br><br>* colonne 4, ligne 33 - colonne 6, ligne 52; figures 1-5 *<br>--- | 1,2,5,7, 9 | B60F1/04<br>B60G17/052<br>B62D61/12 |
| A | FR-A-2 314 067 (SWEDISH RAIL SYSTEM AB SRS)<br>* page 5, ligne 8 - ligne 18; figures 4,5 *<br>--- | 1 | |
| A | US-A-2 482 564 (R. TOWNSEND)<br>* colonne 4, ligne 34 - ligne 38; figures 1-6 *<br>--- | 1 | |
| A | US-A-4 102 424 (A. HEINZE)<br>* le document en entier *<br>--- | 1 | |
| A | DE-A-2 038 446 (DUNLOP CO., LTD.)<br>* le document en entier *<br><br>----- | 1,3 | |

**DOMAINES TECHNIQUES RECHERCHES (Int. Cl.5)**

B60F
B60G
B62D

Le présent rapport a été établi pour toutes les revendications

| Lieu de la recherche | Date d'achèvement de la recherche | Examinateur |
|---|---|---|
| LA HAYE | 26 FEVRIER 1992 | CZAJKOWSKI A. R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)